# EUROPEAN PATENT APPLICATION

(11) **EP 3 190 511 A1**
(43) Date of publication of application: **12.07.2017**
(21) Application number: 15838689.6
(22) Date of filing: 01.09.2015
(51) Int. Cl.: G06F 3/14

(54) **DISPLAY CONTROL METHOD AND ELECTRONIC DEVICE THEREOF**

(30) Priority: 01.09.2014 KR 20140115541
(71) Applicant: Samsung Electronics Co., Ltd, Gyeonggi-do 16677 (KR)
(72) Inventor: BAE, Soo-Jung, Seoul 05817 (KR); KOH, Sang-Hyuk, Seoul 06732 (KR); KIM, Ha-Young, Seoul 06314 (KR); KIM, Hyung-Min, Seoul 04773 (KR); LEE, Min-Hee, Seoul 06265 (KR); LEE, Hye-Mi, Incheon 21321 (KR); LEE, Ho-Young, Seoul 05265 (KR); JANG, Chul-Ho, Seoul 07065 (KR); CHOI, Hye-Ryoung, Gwangmyeong-si Gyeonggi-do 14256 (KR); KIM, Annie, Seoul 05567 (KR); YANG, Chang-Mo, Anyang-si Gyeonggi-do 14040 (KR)
(74) Representative: HGF Limited
(86) International application number: PCT/KR2015/009202
(87) International publication number: WO 2016/036117

(57) **Abstract**

According to various embodiments of the present invention, a method for operating an electronic device may include checking context information for controlling a display divided into a first display and a second display, and controlling at least one of the first display and the second display based on the context information. According to various example embodiments, the electronic device can implement a method for controlling a display.

## Description

### Technical Field

Various embodiments relate to a method and an apparatus for controlling a display in an electronic device.

### Background Art

In recent, electronic devices which executes one or more functions in combination are gradually increasing. Further, as the electronic devices, mobile terminals classified as so-called smart phones are mainstream. An electronic device such as a mobile terminal includes a display module of a large-screen touch type, includes a high-pixel camera module in addition to a basic function which is communication with other party, and thus may enable still image or moving image capturing and web surfing by accessing a network. Such an electronic device can gradually include a high-performance processor and thus perform various functions.

### Disclosure of Invention

### Technical Problem

Through various embodiments, an electronic device can provide a method and an apparatus for controlling a display.

Through various embodiments, an electronic device can provide a method and an apparatus for controlling a divided display.

Through various embodiments, an electronic device can provide a method and an apparatus for controlling a display attribute of at least part of a divided display.

Through various embodiments, an electronic device can provide a method and an apparatus for controlling power of at least one part of a divided display.

### Solution to Problem

According to various embodiments, an electronic device can include a display divided into a first display and a second display; and a processor for checking context information indicating a status change of the electronic device and controlling at least one of the first display and the second display based on the context information.

According to various embodiments, a method for operating an electronic device can include checking context information for controlling a display divided into a first display and a second display; and controlling at least one of the first display and the second display based on the context information.

According to various embodiments, a computer-readable recording medium storing instructions can be a computer-readable recording medium recording a program for checking context information for controlling a display divided into a first display and a second display; and controlling at least one of the first display and the second display based on the context information.

### Advantageous Effects of Invention

Through various embodiments, an electronic device controls a display attribute of a divided display based on context information, and thus can reduce power consumption through the display and reduce a user's visual burden.

### Brief Description of Drawings

FIG. 1A depicts a network environment 100 including an electronic device 101 according to various embodiments.
FIG. 1B depicts a processor 120 of an electronic device (e.g., the electronic device 101) according to various embodiments.
FIG. 2 depicts a block diagram 200 of an electronic device 201 according to various embodiments.
FIG. 3 depicts a block diagram 300 of a program module 310 according to various embodiments.
FIG. 4 depicts an electronic device including a divided display according to various embodiments.
FIG. 5 depicts a method for limiting a display attribute of an auxiliary display unit based on a sleep mode in an electronic device according to various embodiments.
FIG. 6 depicts a configuration for limiting a display attribute of an auxiliary display unit based on a sleep mode in an electronic device according to various embodiments.
FIGS. 7A and 7B depict a method for limiting a display attribute of an auxiliary display unit based on a tablet mode in an electronic device according to various embodiments.
FIG. 8 depicts a configuration for limiting a display attribute of an auxiliary display unit based on a tablet mode in an electronic device according to various embodiments.
FIG. 9 depicts a method for limiting a display attribute of an auxiliary display unit based on connection/disconnection with an external electronic device in an electronic device according to various embodiments.
FIG. 10 depicts a configuration for limiting a display attribute of an auxiliary display unit based on connection/disconnection with an external electronic device in an electronic device according to various embodiments.
FIG. 11 depicts a method for controlling a display attribute of an auxiliary display unit based on a reference time in an electronic device according to various embodiments.
FIGS. 12A through 12C depict a configuration for controlling a display attribute of an auxiliary display unit based on a reference time in an electronic device according to various embodiments.
FIG. 13 depicts a method for controlling a display attribute of an auxiliary display unit based on cover closing/opening in an electronic device according to various embodiments.
FIGS. 14A through 14C depict a configuration for controlling a display attribute of an auxiliary display unit based on cover closing/opening in an electronic device according to various embodiments.

### Best Mode for Carrying out the Invention

Hereinafter, various embodiments of the present invention are disclosed with reference to the accompanying drawings. However, it should be understood that it is not intended to limit various embodiments of the present invention to a particular form but, on the contrary, the intention is to cover various modifications, equivalents, and/or alternatives of the embodiments of the present invention. In relation to the description of the drawings, like reference numerals are used for similar components.

In the disclosure, an expression such as "have", "can have", "include" or "can include" refers to presence of a corresponding characteristic (e.g., a number, a function, an operation, or a component such as a part), and it does not exclude presence of an additional characteristic.

In the disclosure, an expression such as "A or B", "at least one of A or/and B", or "one or more of A or/and B" can include any and every combination of items listed together. For example, "A or B", "at least one of A or/and B", or "one or more of A or/and B" can indicate the entire of (1) a case of including at least one A, (2) a case of including at least one B, or (3) a case of including both at least one A and at least one B.

Expressions such as "first," "second," "primarily," or "secondary" used in various embodiments can represent various elements regardless of order and/or importance and do not limit corresponding elements. The expressions can be used for distinguishing one element from another element. For example, a first user device and a second user device can represent different user devices regardless of order or importance. For example, a first element can be referred to as a second element without deviating from the scope of the present disclosure, and similarly, a second element may be referred to as a first element.

When it is described that an element (e.g., a first element) is "operatively or communicatively coupled with/to" or "connected to" another element (e.g., a second element), it should be understood that the element can be directly connected to the another element or can be connected to the another element through other element (e.g., a third element). By contrast, when it is described that an element (e.g., a first element) is "directly connected" or "directly coupled" to another element (e.g., a second element), it should be understood that there is no other element (e.g., a third element) between the element and the another element.

An expression "configured to (or set)" used in the present disclosure can be replaced with, for example, "suitable for," "having the capacity to," "designed to," "adapted to," "made to," or "capable of" according to a situation. A term "configured to (or set)" may not always mean only "specifically designed to" by hardware. Instead, in some situation, an expression "apparatus configured to" can mean that the apparatus "can" operate together with another apparatus or component. For example, "a processor configured (or set) to perform A, B, and C" can be a dedicated processor (e.g., an embedded processor) for performing a corresponding operation or a generic-purpose processor (e.g., a Central Processing Unit (CPU) or an application processor) which can perform a corresponding operation by executing one or more software programs stored in a memory device.

Terms used in the present disclosure are used for only describing a specific embodiment and may not intend to limit the scope of other embodiments. A singular form can include a plurality of forms unless it is explicitly differently represented. All the terms used herein, including technical and scientific terms, can have the same meanings as terms that are generally understood by those skilled in the art. The terms defined in a general dictionary can be interpreted to have the same or similar meanings with the context of the relevant art, and, unless explicitly defined in this disclosure, it shall not be interpreted ideally or excessively as formal meanings. In some cases, even the terms defined in this disclosure cannot be interpreted to exclude the embodiments of the present disclosure.

An electronic device according to various embodiments of the present invention can include, for example, at least one of a smart phone, a tablet Personal Computer (PC), a mobile phone, a video phone, an e-book reader, a desktop PC, a laptop PC, a Netbook computer, a workstation, a sever, a Personal Digital Assistant (PDA), a Portable Multimedia Player (PMP), an MPEG 3 (MP3) player, a mobile medical equipment, a camera, or a wearable device (e.g., smart glasses, a Head-Mounted-Device (HMD), electronic clothing, an electronic bracelet, an electronic necklace, an electronic accessory, electronic tattoo, a smart mirror, or a smart watch)).

In some embodiments, the electronic device can be a smart home appliance. The smart home appliance can include at least one of, for example, a television, a Digital Video Disk (DVD) player, an audio device, a refrigerator, an air-conditioner, a cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™, PlayStation™), an electronic dictionary, an electronic key, a camcorder, or an electronic frame.

In another embodiment, the electronic device can include at least one of various medical devices (e..g, various portable medical measuring devices (a blood sugar measuring device, a heartbeat measuring device, a blood pressure measuring device, or a body temperature measuring device), a Magnetic Resonance Angiography (MRA) device, a Magnetic Resonance Imaging (MRI) device, a Computed Tomography (CT) device, a scanning machine, and an ultrasonic wave device), a navigation device, a Global Positioning System (GPS) receiver, an Event Data Recorder (EDR), a Flight Data recorder (FDR), a vehicle infotainment device, an electronic equipment for ship (e.g., a navigation device for ship, a gyro compass), avionics, a security device, a head unit for a vehicle, an industrial or home robot, an Automatic Teller's Machine (ATM) of a financial institution, a Point of Sales (POS) of a store, or Internet of things (e.g., a bulb, various sensors, an electric or gas meter, a sprinkler device, a fire alarm, a thermostat, a street light, a toaster, a sports equipment, a hot water tank, a heater, and a boiler).

According to an embodiment, the electronic device can include at least one of a portion of furniture or building/construction, an electronic board, an electronic signature receiving device, a projector, or various measuring devices (e.g., water supply, electricity, gas, or electric wave measuring device). According to various embodiments, the electronic device can combine one or more of the various devices above-stated. An electronic device according to an embodiment can be a flexible electronic device. Further, the electronic device according to the embodiment of the present disclosure is not limited to the foregoing devices and can include a new electronic device according to technical development.

Hereinafter, an electronic device according to various embodiments will be described with reference to the accompanying drawings. In the present disclosure, a term "user" can indicate a person using the electronic device or a device (e.g., artificial intelligence electronic device) using the electronic device.

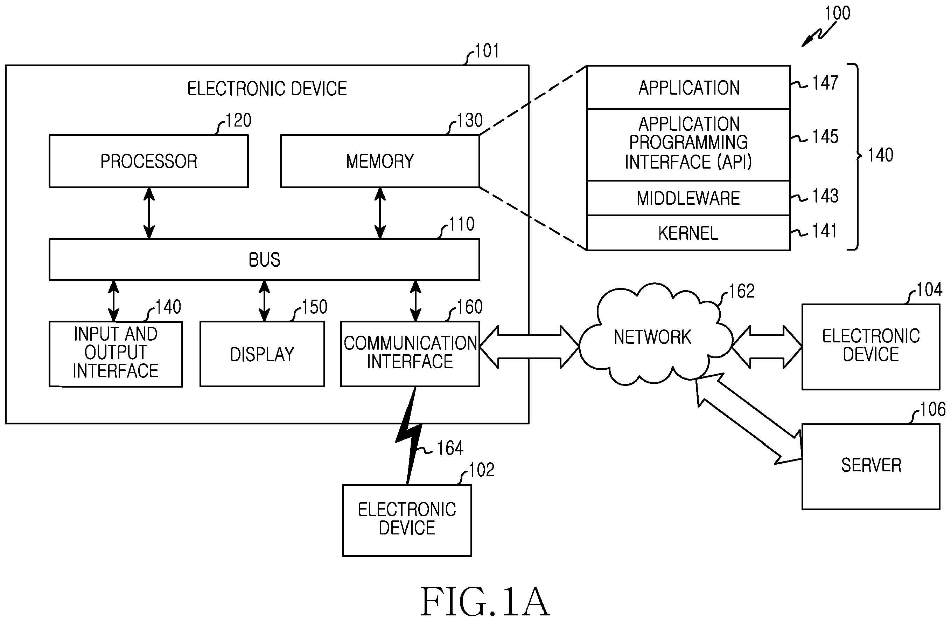

FIG. 1A depicts a network environment 100 including an electronic device 101 according to various embodiments.

Referring to FIG. 1A, in various embodiments, the electronic device 101 in the network environment 100 is disclosed. The electronic device 101 can include a bus 110, a processor 120, a memory 130, an input/output interface 150, a display 160, and a communication interface 170. In an embodiment, the electronic device 101 can omit at least one of the components (e.g., the bus 110, the processor 120, the memory 130, the input/output interface 150, the display 160, and the communication interface 170) or further include another component.

The bus 110 can include, for example, a circuit for interlinking the components (e.g., the bus 110, the processor 120, the memory 130, the input/output interface 150, the display 160, and the communication interface 170) and transferring communications (e.g., control messages and/or data) between the components (e.g., the bus 110, the processor 120, the memory 130, the input/output interface 150, the display 160, and the communication interface 170).

The processor 120 can include one or more of a CPU, an Application Processor (AP), or a Communication Processor (CP). The processor 120 can, for example, perform an operation or data processing for control and/or communications of at least one other component of the electronic device 101.

The memory 130 can include a volatile and/or non-volatile memory. The memory 130 can store, for example, an instruction or data relating to at least one other component of the electronic device 101. According to one embodiment, the memory 130 can store software and/or a program 140. The program 140 can include, for example, a kernel 141, middleware 143, an Application Programming Interface (API) 145, and/or an application program (or application) 147. At least part of the kernel 141, the middleware 143, or the API 145 can be referred to an Operating System (OS).

The kernel 141 can control or manage system resources (e.g., the bus 110, the processor 120, or the memory 130) used to execute operations or functions of the other programs (e.g., the middleware 143, the API 145, or the application program 147). Also, the kernel 141 can provide an interface allowing the middleware 143, the API 145, or the application program 147 to control or manage the system resources by accessing the individual component of the electronic device 101.

The middleware 143 can serve as an intermediary so that, for example, the API 145 or the application program 147 can communicate data with the kernel 141. Also, with respect to work requests received from the application program 147, for example, the middleware 143 can control (e.g., scheduling or load balancing) the work request by giving priority for using the system resources (e.g., the bus 110, the processor 120, or the memory 130) of the electronic device 101 to at least one application of the application program 147.

The API 145, as an interface through which the application 147 controls a function provided from the kernel 141 or the middleware 143, can include, for example, at least one interface or function (e.g., an instruction) for file control, window control, image processing, or character control.

The input/output interface 150, for example, can serve as an interface for delivering commands or data inputted from a user or another external device to other component(s) of the electronic device 101. Also, the input/output interface 150 can output commands or data inputted from the other component(s) of the electronic device 101 to the user or another external device.

The display 160, for example, can include a Liquid Crystal Display (LCD), a Light Emitting Diode (LED) display, an Organic Light Emitting Diode (OLED) display, a MicroElectroMechanical Systems (MEMS) display, or an electronic paper display. The display 160, for example, can display various contents (e.g., texts, images, videos, icons, or symbols) to the user. The display 160 can include a touch screen, for example, and receive touch, gesture, proximity, or hovering input by using an electronic pen or a user's body part.

The communication interface 170, for example, can set communication between the electronic device 101 and an external device (e.g., a first external electronic device 102, a second external electronic device 104, or a server 106). For example, the communication interface 170 can communicate with the external device (e.g., the second external electronic device 104 or the server 106) over a network 162 through wireless communication or wired communication.

The wireless communication, for example, as cellular communication protocol, for can use at least one of, for example, Long Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro), or Global System for Mobile Communications (GSM). The wired communication, for example, can include at least one of Universal Serial Bus (USB), High Definition Multimedia Interface (HDMI), Recommended Standard 232 (RS-232), or Plain Old Telephone Service (POTS). The network 162 can include a telecommunications network, for example, at least one of computer network (e.g., Local Area Network (LAN) or Wide Area Network (WAN)), Internet, and telephone network.

Each of the first external electronic device 102 and the second external electronic devices 104 can be a device of the same type as or of a different type from the electronic device 101. According to one embodiment, the server 106 can include one or more groups of servers. According to various embodiments, all or part of operations executed in the electronic device 101 can be executed by another electronic device or a plurality of electronic devices (e.g., the electronic devices 102 and 104, or the server 106). According to one embodiment, to perform a function or a service automatically or by request, instead of or addition to performing the function or the service by the electronic device 101, the electronic device 101 can request at least part of the related function from another device (e.g., the electronic device 102 or 104, or the server 106). The other electronic device (e.g., the electronic device 102 or 104, or the server 106) can perform the requested function or an additional function and send its result to the electronic device 101. The electronic device 101 can provide the requested function or service as received or by processing the received result. For doing so, for example, cloud computing, distributed computing, or client-server computing technique can be used.

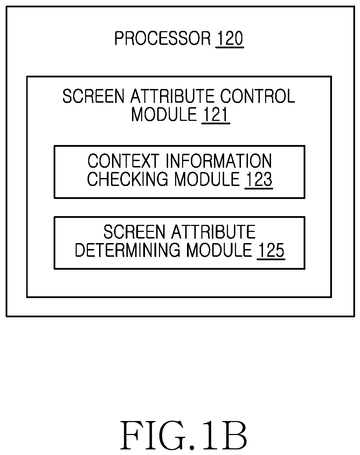

FIG. 1B depicts a processor 120 of an electronic device (e.g., the electronic device 101) according to various embodiments.

Referring to FIG. 1B, the processor 120 can include a screen attribute control module 121.

The screen attribute control module 121 can control an overall function for controlling a screen attribute in the electronic device. According to one embodiment, the screen attribute control module 121 can include a context information checking module 123 and a screen attribute determining module 125.

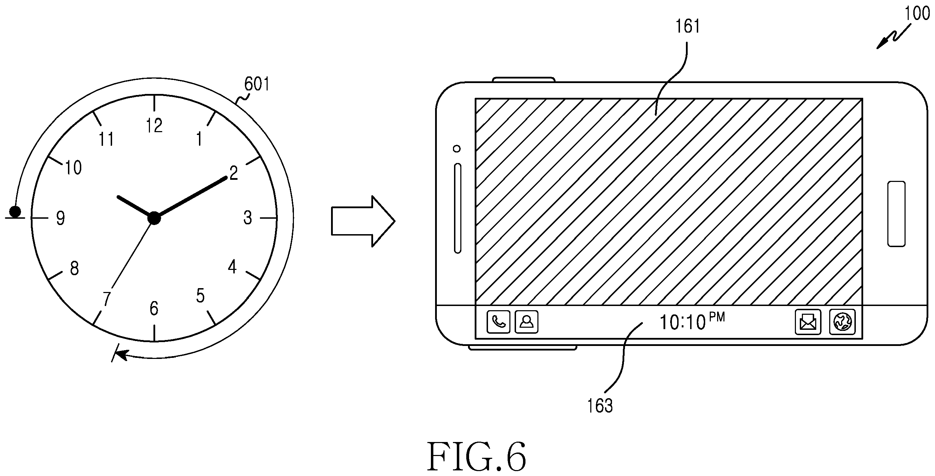

The context information checking module 123 can check context information for controlling the screen attribute in the electronic device. According to one embodiment, the context information checking module 123 can check whether a sleep mode operation mode arrives. For example, as shown in FIG. 6, the sleep mode operation mode 601 can range from 9 PM to 6:30 AM the next morning.

According to one embodiment, the context information checking module 123 can check whether at least one of a movement and an input occurs during a reference time. According to one embodiment, when at least one of the movement and the input does not occur during the reference time, the context information checking module 123 can determine to operate in a tablet mode. For example, the context information checking module 123 can check whether the movement occurs during the reference time using a motion sensor. For example, the context information checking module 123 can check whether an input occurs through a touch screen.

According to one embodiment, the context information checking module 123 can check whether a predefined external electronic device is connected. For example, the external electronic device can be a dock 1001 which can be connected to a connector of the electronic device 100. For example, the external electronic device can be an Access Point (AP) wirelessly connected with the electronic device. In so doing, the electronic device 100 can check whether the AP corresponding to a predefined Service Set IDentifier (SSID) is accessed.

According to one embodiment, the context information checking module 123 can detect whether a cover is closed. For example, the context information checking module 123 can detect whether the cover is closed using a hall sensor (hall IC) or a proximity sensor.

The screen attribute determining module 125 can receive a context for controlling display through the context information checking module 123 and control at least part of a divided display. According to one embodiment, the screen attribute determining module 125 can cut power supply of a first display 161 based on one of multiple context information, and limit a display attribute of a second display 163. For example, the screen attribute determining module 125 can limit a brightness level which can be displayed through the second display 163, below a reference level. For example, the screen attribute determining module 125 can limit the number of colors which can be displayed through the second display 163, below a reference number. For example, the screen attribute determining module 125 can limit a screen refresh rate of the second display 163 below a reference rate.

According to one embodiment, the screen attribute determining module 125 can display at least one of a clock (e.g., current time information, time information based on a current location), weather (e.g., weather information based on a current location), and a notification time (e.g., fastest alarm information) on the second display 163. For example, the screen attribute determining module 125 can determine information to display on the second display 163 based on a user selection.

According to one embodiment, when the first display 161 and the second display 163 are a single display, that is, when the screen attribute determining module 125 cannot cut the power supply of the first display 161 alone, it can display the first display 161 with a black image or control only a backlight.

According to one embodiment, after limiting the display attribute of the second display 163, when a reference time passes, the screen attribute determining module 125 can cut the power supply of the second display 163 like the first display 161. Alternatively, the screen attribute determining module 125 can display the second display 163 with a black image or control only the backlight.

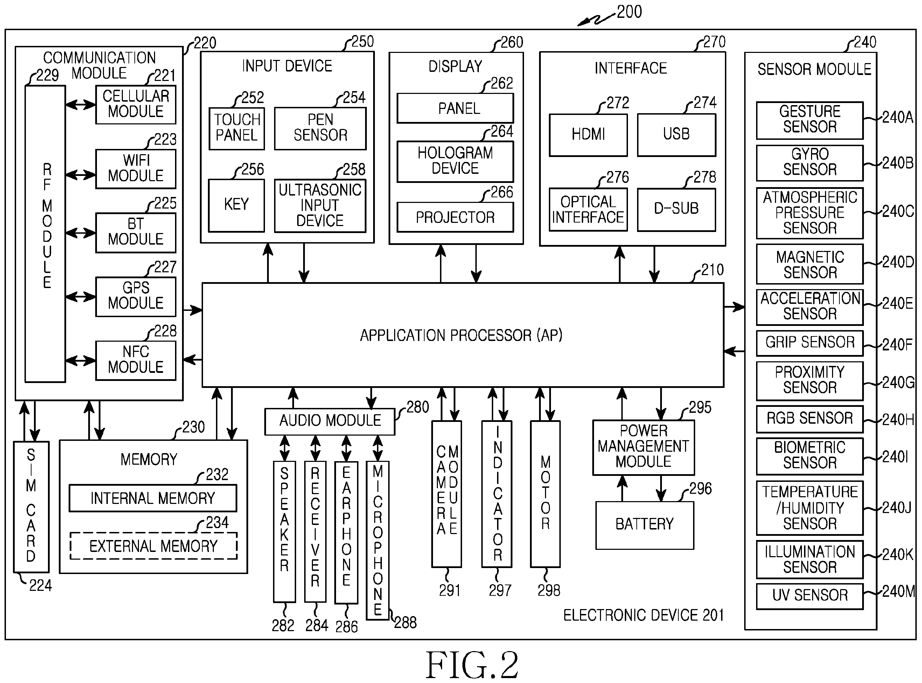

FIG. 2 depicts a block diagram 200 of an electronic device 201 according to various embodiments.

The electronic device 201, for example, can include all or part of the electronic device 101 of FIG. 1A. The electronic device 201 can include one or more APs 210, a communication module 220, a Subscriber Identification Module (SIM) card 224, a memory 230, a sensor module 240, an input device 250, a display 260, an interface 270, an audio module 280, a camera module 291, a power management module 295, a battery 296, an indicator 297, and a motor 298.

The AP 210, for example, can control a plurality of hardware or software components connected to the AP 210, and perform various data processing and operations by executing an OS or an application program. The AP 210 can be implemented with, for example, a System on Chip (SoC). According to one embodiment, the AP 210 can further include a Graphic Processing Unit (GPU) and/or an image signal processor. The AP 210 may include at least part (e.g., a cellular module 221) of the components shown in FIG. 2. The AP 210 can load and process commands or data received from at least one of the other components (e.g., a nonvolatile memory) into a volatile memory, and store various data in the nonvolatile memory.

The communication module 220 can have the same or similar configuration to the communication interface 160 of FIG. 1A. The communication module 220 can include, for example, a cellular module 221, a WiFi module 223, a Bluetooth (BT) module 225, a GPS module 227, a Near Field Communication (NFC) module 228, and a Radio Frequency (RF) module 229.

The cellular module 221, for example, can provide voice call, video call, text service, or Internet service through a communication network. According to one embodiment, the cellular module 221 can identify and authenticate the electronic device 201 in the communication network by using a SIM (e.g., the SIM card 224). According to one embodiment, the cellular module 221 can perform at least part of a function which can be provided from the AP 210. According to one embodiment, the cellular module 221 can further include a CP.

The WiFi module 223, the BT module 225, the GPS module 227, or the NFC module 228 each can include, for example, a processor for processing data transmitted and received through a corresponding module. According to an embodiment, at least some (e.g., two or more) of the cellular module 221, the WiFi module 223, the BT module 225, the GPS module 227, or the NFC module 228 can be included in one Integrated Chip (IC) or an IC package.

The RF module 229, for example, can transmit and receive communication signals (e.g., RF signals). The RF module 229, for example, can include a transceiver, a Power Amp Module (PAM), a frequency filter, a Low Noise Amplifier (LNA), or an antenna. According to another embodiment, at least one of the cellular module 221, the WiFi module 223, the BT module 225, the GPS module 227, or the NFC module 228 can transmit and receive RF signals through an additional RF module.

The SIM card 224, for example, can include a card including a SIM and/or an embedded SIM, and include unique identification information (e.g., an Integrated Circuit Card Identifier (ICCID)) or subscriber information (e.g., an International Mobile Subscriber Identity (IMSI)).

The memory 230 (e.g., the memory 230) can include, for example, an internal memory 232 or an external memory 234. The internal memory 232 can include at least one of, for example, a volatile memory (e.g., Dynamic Random Access Memory (DRAM), Static RAM (SRAM), or Synchronous Dynamic RAM (SDRAM)), and a non-volatile memory (e.g., One Time Programmable Read Only Memory (OTPROM), Programmable ROM (PROM), Erasable and Programmable ROM (EPROM), Electrically Erasable and Programmable ROM (EEPROM), mask ROM, flash ROM, flash memory (e.g., NAND flash or NOR flash), hard drive, or Solid State Drive (SSD)).

The external memory 234 can further include flash drive, for example, Compact Flash (CF), Secure Digital (SD), micro SD, mini SD, extreme digital (xD), or memory stick. The external memory 234 can be functionally and/or physically connected to the electronic device 201 through various interfaces.

The sensor module 240 can, for example, measure physical quantities or detect an operating state of the electronic device 201, and thus convert the measured or detected information into electrical signals. The sensor module 240, for example, can include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a Red, Green, Blue (RGB) sensor), a bio sensor 2401, a temperature/humidity sensor 240J, an illumination sensor 240K, or an Ultra Violet (UV) sensor 240M. Additionally or alternately, the sensor module 240, for example, can include an E-nose sensor, an Electromyography (EMG) sensor, an Electroencephalogram (EEG) sensor, an Electrocardiogram (ECG) sensor, an InfraRed (IR) sensor, an iris sensor, and/or a fingerprint sensor. The sensor module 240 can further include a control circuit for controlling at least one sensor therein. According to an embodiment, the electronic device 201, as part of the AP 210 or individually, can further include a processor configured to control the sensor module 240 and thus control the sensor module 240 while the AP 210 is sleeping.

The input device 250 can include, for example, a touch panel 252, a (digital) pen sensor 254, a key 256, or an ultrasonic input device 258. The touch panel 252 can use at least one of, for example, capacitive, resistive, infrared, or ultrasonic methods. Also, the touch panel 252 may further include a control circuit. The touch panel 252 can further include a tactile layer and provide a tactile response to the user.

The (digital) pen sensor 254 can include, for example, part of a touch panel or a separate sheet for recognition. The key 256 can include, for example, a physical button, a touch key, an optical key, or a keypad. The ultrasonic input device 258 can obtain data by detecting ultrasonic waves to a microphone (e.g., the microphone 288) in the electronic device 201 through an input tool which generates an ultrasonic signal.

The display 260 (e.g., the display 160) can include a panel 262, a hologram device 264, or a projector 266. The panel 262 can include the same or similar configuration as the display 160 of FIG. 1A. The panel 262, for example, can be implemented to be flexible, transparent, or wearable. The panel 262 and the touch panel 252 can be configured as one module. The hologram device 264 can show three-dimensional images in the air by using interference of light. The projector 266 can display an image by projecting light on a screen. The screen, for example, can be placed inside or outside the electronic device 201. According to one embodiment, the display 260 can further include a control circuit for controlling the panel 262, the hologram device 264, or the projector 266.

The interface 270 can include, for example, an HDMI 272, a USB 274, an optical interface 276, or a D-subminiature (D-sub) 278. The interface 270 can be included in, for example, the communication interface 160 of FIG. 1A. Additionally or alternately, the interface 270, for example, can include a Mobile High-Definition Link (MHL) interface, a SD card/Multi-Media Card (MMC) interface, or an Infrared Data Association (IrDA) standard interface.

The audio module 280, for example, can convert sounds into electrical signals and vice versa. At least some components of the audio module 280 can be included in, for example, the input/output interface 140 of FIG. 1A. The audio module 280 can process sound information inputted or outputted through, for example, a speaker 282, a receiver 284, an earphone 286, or the microphone 288.

The camera module 291 is, for example, a device for capturing still images and moving images. According to one embodiment, the camera module 291 can include one or more image sensors (e.g., a front sensor or a rear sensor), a lens, an Image Signal Processor (ISP), or a flash (e.g., an LED or a xenon lamp).

The power management module 295, for example, can manage the power of the electronic device 201. According to one embodiment, the power management module 295 can include a Power Management IC (PMIC), a charger IC, or a battery or fuel gauge. The PMIC can have a wired and/or wireless charging method. The wireless charging method can include, for example, a magnetic resonance method, a magnetic induction method, or an electromagnetic method, and can further include an additional circuit for wireless charging, for example, a coil loop, a resonant circuit, or a rectifier. The battery gauge, for example, can measure the remaining capacity of the battery 296, a voltage, currents, or temperature of the battery 296 during charging. The battery 296 can include, for example, a rechargeable battery and/or a solar battery.

The indicator 297 can display a specific state of the electronic device 201 or part thereof (e.g., the AP 210), for example, a booting state, a message state, or a charging state. The motor 298 can convert electrical signals into mechanical vibration and generate a vibration or haptic effect. Although not depicted, the electronic device 201 can include a processing device (e.g., a GPU) for supporting mobile TV. The processing device for supporting mobile TV, for example, can process media data according to standards such as Digital Multimedia Broadcasting (DMB), Digital Video Broadcasting (DVB), or media flow.

Each of the above-described components of the electronic device can be configured with one or more components, and the name of a corresponding component can vary according to a type of an electronic device. According to various embodiments, the electronic device can be configured to include at least one of the above-described components, omit some components, or further include an additional component. Also, some of the components of the electronic device according to various embodiments can be combined as one entity and thus identically perform the functions of the corresponding components.

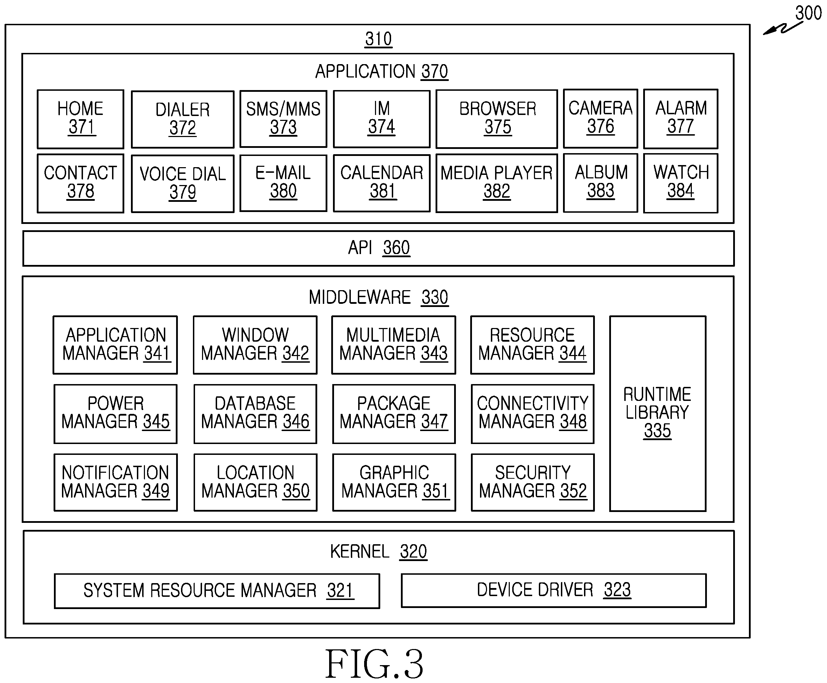

FIG. 3 is a block diagram 300 of a program module 310 according to various embodiments.

According to one embodiment, the program module 310 (e.g., the program 140) can include an OS for controlling a resource relating to an electronic device (e.g., the electronic device 101) and/or various applications (e.g., the application program 147) running on the OS. The OS can include, for example, Android, iOS, Windows, Symbian, Tizen, or Bada.

The program module 310 can include a kernel 320, a middleware 330, an API 360, and/or an application 370. At least part of the program module 310 can be preloaded on an electronic device or downloaded from a server (e.g., the server 106).

The kernel 320 (e.g., the kernel 141 of FIG. 1A) can include, for example, a system resource manager 321 or a device driver 323. The system resource manager 321 can control, allocate, or retrieve a system resource. According to one embodiment, the system resource manager 321 can include a process management unit, a memory management unit, or a file system management unit. The device driver 323 can include, for example, a display driver, a camera driver, a Bluetooth driver, a sharing memory driver, a USB driver, a keypad driver, a WiFi driver, an audio driver, or an Inter-Process Communication (IPC) driver.

The middleware 330, for example, can provide a function commonly required by the application 370, or provide various functions to the application 370 through the API 360 so that the application 370 can efficiently use limited system resources inside the electronic device. According to one embodiment, the middleware 330 (e.g., the middleware 143) can include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 can include, for example, a library module used by a complier to add a new function through a programming language while the application 370 is running. The runtime library 335 can manage input/output, manage memory, or arithmetic function.

The application manager 341, for example, can manage a life cycle of at least one of the applications 370. The window manager 342 can manage a Graphical User Interface (GUI) resource used in a screen. The multimedia manager 343 can recognize a format for playing various media files, and encode or decode a media file by using the codec of a corresponding format. The resource manager 344 can manage a source code of at least one of the application 370, and the resource such as memory or storage space.

The power manager 345 can manage the battery or the power by operating with, for example, Basic Input/Output System (BIOS), and provide power information for the operation of the electronic device. The database manager 346 can create, search, or modify a database to be used by at least one of the application 370. The package manager 347 can manage installation or updating of an application distributed in a package file format.

The connectivity manger 348 can manage, for example, a wireless connection such as WiFi or Bluetooth. The notification manager 349 can display or notify an event such as incoming message, appointment, and proximity alert, to the user not to interrupt the user. The location manager 350 can manage location information of the electronic device. The graphic manager 351 can manage a graphic effect to be provided to the user or a user interface relating thereto. The security manager 352 can provide all security functions for system security or user authentication. According to one embodiment, when the electronic device (e.g., the electronic device 101) includes a telephone function, the middleware 330 can further include a telephony manager for managing a voice or video call function of the electronic device.

The middleware 330 can include a middleware module for combining various functions of the above-described components. The middleware 330 can provide a module specialized for each type of the OS to provide a distinguished function. Also, the middleware 330 can dynamically delete part of the existing components or add new components.

The API 360 (e.g., API 145), as a set of API programming functions, can be provided as a different configuration according to the OS. For example, Android or iSO can provide one API set for each platform, and Tizen can provide two or more API sets for each platform.

The application 370 (e.g., the application program 147), for example, can include one or more applications for providing functions of a home 371, a dialer 372, an SMS/Multimedia Messaging System (MMS) 373, an Instant Message (IM) 374, a browser 375, a camera 376, an alarm 377, a contact 378, a voice dial 379, an e-mail 380, a calendar 381, a media player 382, an album 383, a watch 384, health care (e.g., measure an exercise amount or blood sugar level), or environmental information provision (e.g., provide air pressure, humidity, or temperature information).

According to one embodiment, the application 370 can include an application (hereafter, for the understanding, an information exchange application) for supporting information exchange between the electronic device (e.g., the electronic device 101) and an external electronic device (e.g., the electronic device 102 or 104). The information exchange application can include, for example, a notification relay application for relaying specific information to the external device or a device management application for managing the external electronic device.

For example, the notification relay application can forward notification information generated from another application (e.g., the SMS/MMS application, the email application, the health care application, or the environmental information provision application) of the electronic device to the external electronic device (e.g., the electronic device 102 or 104). Also, the notification relay application, for example, can receive and forward notification information from the external electronic device to the user. The device management application, for example, can manage (e.g., install, delete, or update) at least one function (e.g., turn-on/turn off of the external electronic device itself (or some components) or display brightness (or resolution) adjustment) of the external electronic device communicating with the electronic device, an application operating in the external electronic device, or a service (e.g., call service or message service) provided from the external electronic device.

According to one embodiment, the application 370 can include a designated application (e.g., a health care application) according to a property (e.g., a property of the electronic device, the type of the electronic device is a mobile medical device) of the external electronic device (e.g., the electronic device 102 or 104). According to one embodiment, the application 370 can include an application received from the external electronic device (e.g., the server 106 or the electronic device 102, 104). According to one embodiment, the application 370 can include a preloaded application or a third party application which can be downloaded from the server. The names of the components of the program module 310 according to the embodiment can vary according to the type of the OS.

According to various embodiments, at least part of the program module 310 can be implemented with software, firmware, hardware, or a combination of at least two of them. At least part of the program module 310 can be implemented with, for example, a processor (e.g., the AP 210). At least part of the program module 310 can include, for example, a module, a program, a routine, sets of instructions, or a process for executing one or more functions.

According to various embodiments, an electronic device can be an electronic device including a display divided into a first display and a second display; and a processor for checking context information indicating a status change of the electronic device and controlling at least one of the first display and the second display based on the context information.

According to various embodiments, the first display and the second display can be configured as independent displays in the electronic device.

According to various embodiments, the first display and the second display can be at least partial areas of the display in the electronic device.

According to various embodiments, the processor can control to cut power of at least one of the first display and the second display based on the context information in the electronic device.

According to various embodiments, the processor can display by limiting a display attribute of at least one of the first display and the second display based on the context information in the electronic device.

According to various embodiments, the display attribute can include at least one of a brightness level, the number of colors, and a screen refresh rate which can be displayed on the first display and the second display in the electronic device.

According to various embodiments, the processor can control to cut power of the first display during a preset time and to display by limiting a display attribute of the second display in the electronic device.

According to various embodiments, when no movement occurs during a reference time, the processor can control to cut power of the first display and to display by limiting a display attribute of the second display in the electronic device.

According to various embodiments, when no movement and input occur during a reference time, the processor can control to cut power of the first display and to display by limiting a display attribute of the second display in the electronic device.

According to various embodiments, when detecting that the display is covered by a cover, the processor can control to cut power of the first display and to display by limiting a display attribute of the second display in the electronic device.

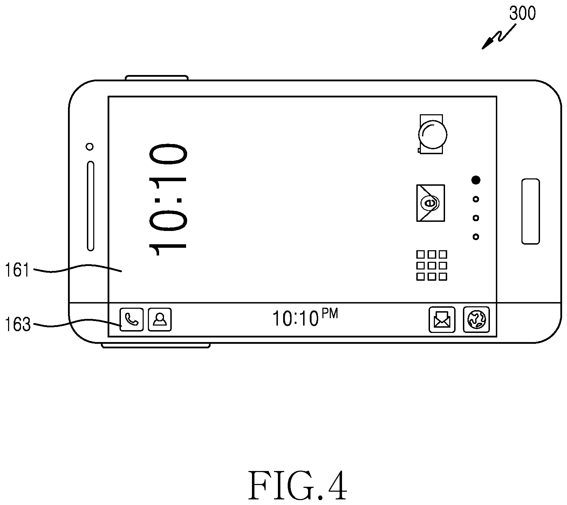

FIG. 4 depicts an electronic device including a divided display according to various embodiments.

According to one embodiment, the first display 161 and the second display 163 can one display (e.g., the display 160 of FIG. 1A). For example, the first display 161 and the second display 163 can divide a display area of the one display into a first are and a second area.

According to one embodiment, the first display 161 and the second display 163 can be configured with different displays.

According to one embodiment, at least one display of the first display 161 and the second display 163 can be curved or bended.

According to one embodiment, the first display 161 and the second display 163 can display different display data under control of the electronic device 100.

According to one embodiment, the first display 161 and the second display 163 can include different screen attributes under the control of the electronic device 100.

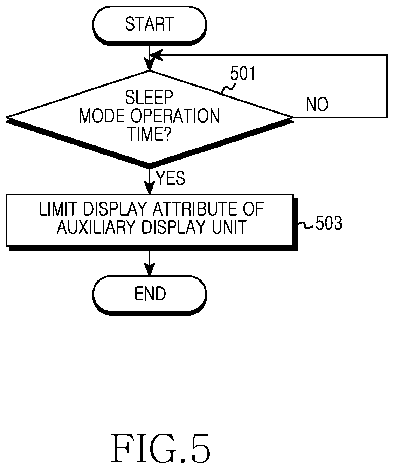

FIG. 5 depicts a method for limiting a display attribute of an auxiliary display unit based on a sleep mode in an electronic device according to various embodiments.

Referring to FIG. 5, in step 501, the electronic device can check whether a sleep mode operation time arrives. According to one embodiment, the electronic device can determine the sleep mode operation time based on user setting. For example, as shown in FIG. 6, the sleep mode operation time 601 can range from 9 AM to 6:30 AM the next morning.

According to one embodiment, the electronic device can determine the sleep mode operation time based on sunset and sunrise times. For example, the electronic device can determine the sleep mode operation time based on the sunset and sunrise times based on a current location.

In step 503, as the sleep mode operation time comes, the electronic device can limit the display attribute of the auxiliary display unit. According to one embodiment, as shown in FIG. 6, the electronic device 100 can cut power supply of the first display 161 and limit the display attribute of the second display 163. For example, the electronic device 100 can limit a brightness level displayed through the second display 163 below a reference level. For example, the electronic device 100 can limit the number of colors which can be displayed through the second display 163 below a reference number. For example, the electronic device 100 can limit a screen refresh rate of the second display 163 below a reference rate.

According to one embodiment, as operating in the sleep mode, the electronic device 100 can display at least one of a clock (e.g., current time information, time information based on the current location), weather (e.g., weather information based on the current location), and a notification time (e.g., the fastest alarm information) on the second display 163. For example, the electronic device 100 can determine information to display on the second display 163 based on a user selection.

In the above-stated embodiment, as the sleep mode operation time comes, the electronic device, but not limited to, cuts the power supply of the first display 161. When the first display 161 and the second display 163 are the single display, that is, when the electronic device 100 cannot cut the power supply of the first display 161 alone, it can display the first display 161 with a black image or control only a backlight.

In the above-stated embodiment, as the sleep mode operation time comes, the electronic device, but not limited to, limits the display attribute of the second display 163. After limiting the display attribute of the second display 163, when a reference time passes, the electronic device 100 can also cut the power supply of the second display 163 like the first display 161. Alternatively, the electronic device 100 can display the second display 163 with a black image or control only the backlight.

In the above-stated embodiment, as the sleep mode operation time comes, the electronic device, but not limited to, limits the display attribute of the second display 163. The electronic device can temporarily release the display attribute limit of the second display 163 based on an ambient brightness. According to one embodiment, the electronic device can detect the ambient brightness using a light sensor.

In the above-stated embodiment, as the sleep mode operation time comes, the electronic device, but not limited to, operates in the sleep mode. The electronic device can operate in the sleep mode based on a user's menu selection with respect to the sleep mode operation.

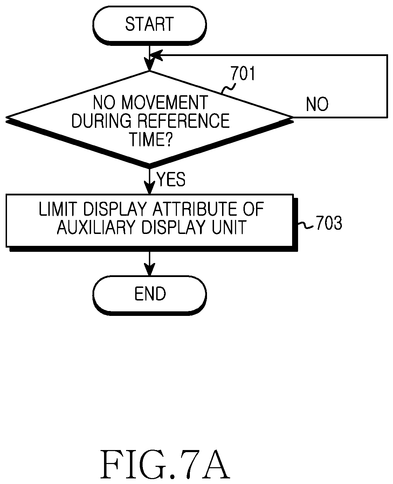

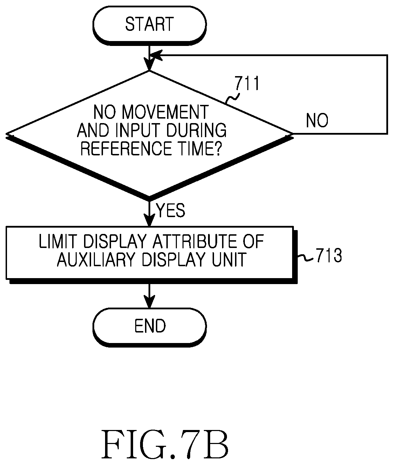

FIGS. 7A and 7B depict a method for limiting a display attribute of an auxiliary display unit based on a tablet mode in an electronic device according to various embodiments.

Referring to FIG. 7A, in step 701, the electronic device checks whether a movement does not occur during a reference time. According to one embodiment, when the movement does not occur during the reference time, the electronic device can determine to operate in the tablet mode. For example, the electronic device can check whether a movement occurs during the reference time using a motion sensor.

Alternatively, referring to FIG. 7B, in step 711, the electronic device checks whether a movement and an input do not occur during the reference time. According to one embodiment, when the movement and the input do not occur during the reference time, the electronic device can determine to operate in the tablet mode. For example, the electronic device can check whether the movement occurs during the reference time using the motion sensor. For example, the electronic device can check whether the input occurs through a touch screen.

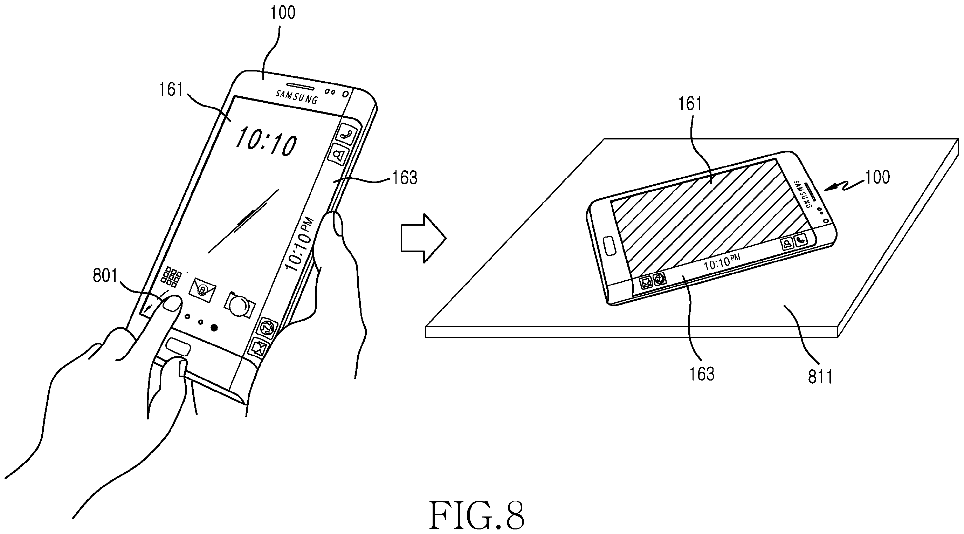

In step 703 or 713, as operating in the tablet mode, the electronic device can limit the display attribute of the auxiliary display unit. According to one embodiment, as shown in FIG. 8, the electronic device 100 can cut power supply of the first display 161 and limit the display attribute of the second display 163. For example, the electronic device 100 can limit the brightness level displayed through the second display 163 below the reference level. For example, the electronic device 100 can limit the number of colors which can be displayed through the second display 163 below the reference number. For example, the electronic device 100 can limit the screen refresh rate of the second display 163 below the reference rate.

According to one embodiment, as operating in the tablet mode, the electronic device 100 can display at least one of a clock (e.g., current time information, time information based on the current location), weather (e.g., weather information based on the current location), and a notification time (e.g., fastest alarm information) on the second display 163. For example, the electronic device 100 can determine information to display on the second display 163 based on a user selection.

In the above-stated embodiment, as operating in the tablet mode, the electronic device, but not limited to, cuts the power supply of the first display 161. When the first display 161 and the second display 163 are the single display, that is, when the electronic device 100 cannot cut the power supply of the first display 161 alone, it can display the first display 161 with a black image or control only the backlight.

In the above-stated embodiment, as operating in the tablet mode, the electronic device, but not limited to, limits the display attribute of the second display 163. After limiting the display attribute of the second display 163, when a reference time passes, the electronic device 100 can also cut the power supply of the second display 163 like the first display 161. Alternatively, the electronic device 100 can display the second display 163 with a black image or control only the backlight.

In the above-stated embodiment, when the movement does not occur during the reference time or when the movement and the input do not occur during the reference time, the electronic device operates in, but not limited to, the tablet mode. The electronic device can operate in the tablet mode based on a user's menu selection on the tablet mode operation.

In the above-stated embodiment, when the movement does not occur during the reference time or when the movement and the input do not occur during the reference time, the electronic device operates in, but not limited to, the tablet mode. Before doing so, the electronic device can determine whether to enter the tablet mode based on user setting (e.g., tablet mode operation ON, OFF).

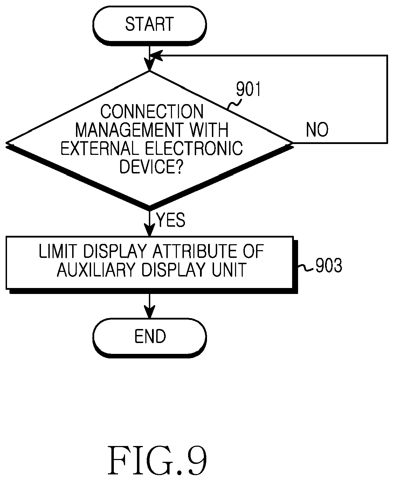

FIG. 9 depicts a method for limiting a display attribute of an auxiliary display unit based on connection/disconnection with an external electronic device in an electronic device according to various embodiments.

Referring to FIG. 9, in step 901, the electronic device can check whether a predefined external electronic device is connected. According to one embodiment, the external electronic device can be a dock 1001 connectable with a connector of the electronic device 100.

According to one embodiment, the external electronic device can be an AP wirelessly connected with the electronic device. For example, the electronic device 100 can check whether the AP corresponding to a predefined SSID is accessed.

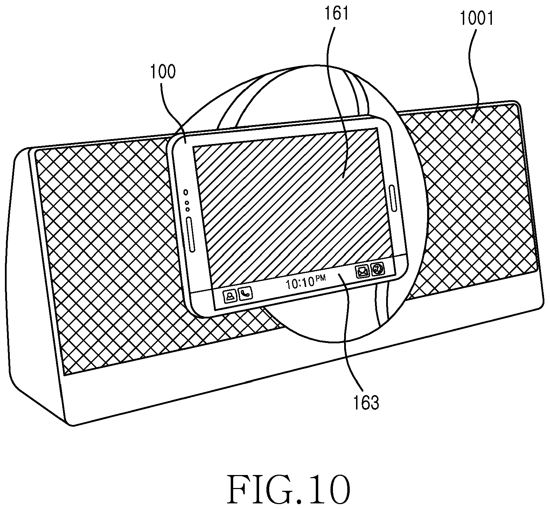

In step 903, as the predefined external electronic device is connected, the electronic device can limit the display attribute of the auxiliary display unit. According to one embodiment, as shown in FIG. 10, the electronic device 100 can cut power supply of the first display 161 and limit the display attribute of the second display 163. For example, the electronic device 100 can limit the brightness level displayed through the second display 163 below the reference level. For example, the electronic device 100 can limit the number of colors which can be displayed through the second display 163 below the reference number. For example, the electronic device 100 can limit the screen refresh rate of the second display 163 below the reference rate.

According to one embodiment, as the predefined external electronic device is connected, the electronic device 100 can display at least one of the clock (e.g., current time information, time information based on the current location), the weather (e.g., weather information based on a current location), and the notification time (e.g., the fastest alarm information) on the second display 163. For example, the electronic device 100 can determine information to display on the second display 163 based on a user selection.

In the above-stated embodiment, as the predefined external electronic device is connected, the electronic device, but not limited to, cuts the power supply of the first display 161. When the first display 161 and the second display 163 are the single display, that is, when the electronic device 100 cannot cut the power supply of the first display 161 alone, it can display the first display 161 with a black image or control only the backlight.

In the above-stated embodiment, as the predefined external electronic device is connected, the electronic device, but not limited to, limits the display attribute of the second display 163. After limiting the display attribute of the second display 163, when a reference time passes, the electronic device 100 can also cut the power supply of the second display 163 like the first display 161. Alternatively, the electronic device 100 can display the second display 163 with a black image or control only the backlight.

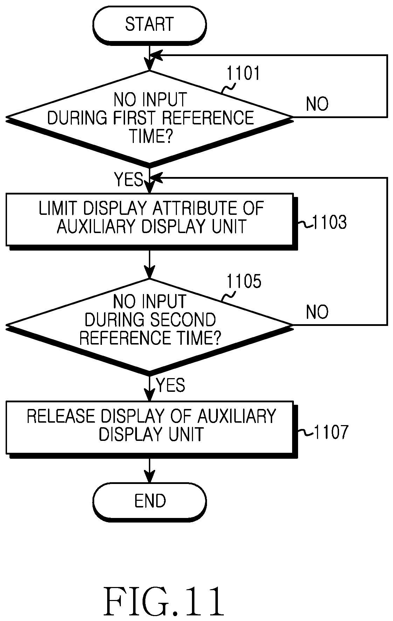

FIG. 11 depicts a method for limiting a display attribute of an auxiliary display unit based on a reference time in an electronic device according to various embodiments.

Referring to FIG. 11, in step 1101, the electronic device can check whether an input does not occur during a first reference time. For example, the electronic device can check whether the input occurs through a touch screen. For example, the electronic device can check whether the input occurs through a button.

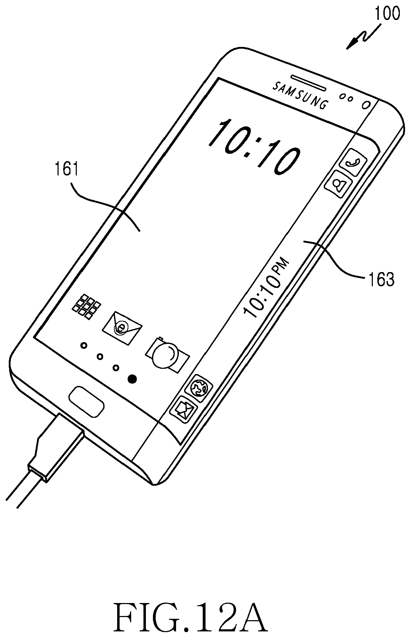

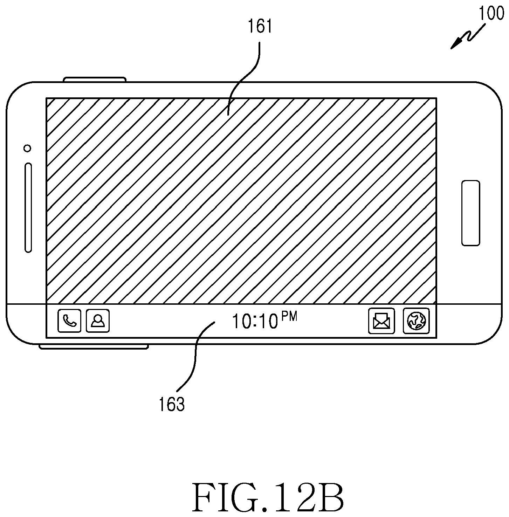

In step 1103, when the input does not occur during the first reference time, the electronic device can limit the display attribute of the auxiliary display unit. According to one embodiment, as shown in FIG. 12A, when the input does not occur for the first reference time during a display event for the first display 161 and the second display 163, the electronic device 100 can cut power supply of the first display 161 and limit the display attribute of the second display 163 as shown in FIG. 12B. For example, the electronic device 100 can limit the brightness level displayed through the second display 163 below the reference level. For example, the electronic device 100 can limit the number of colors which can be displayed through the second display 163 below the reference number. For example, the electronic device 100 can limit the screen refresh rate of the second display 163 below the reference rate.

In the above-stated embodiment, when the input does not occur during the first reference time, the electronic device 100 can display at least one of the clock (e.g., current time information, time information based on the current location), the weather (e.g., weather information based on a current location), and the notification time (e.g., the fastest alarm information) on the second display 163. For example, the electronic device 100 can determine information to display on the second display 163 based on a user selection.

In the above-stated embodiment, when the input does not occur during the first reference time, the electronic device, but not limited to, cuts the power supply of the first display 161. When the first display 161 and the second display 163 are the single display, that is, when the electronic device 100 cannot cut the power supply of the first display 161 alone, it can display the first display 161 with a black image or control only the backlight.

In step 1105, the electronic device can check whether an input does not occur during a second reference time. For example, the electronic device can check whether the input occurs through a touch screen. For example, the electronic device can check whether the input occurs through a button.

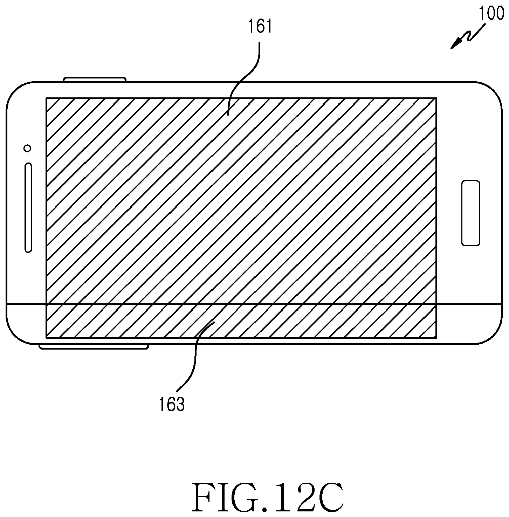

In step 1107, when the input does not occur during the second reference time, the electronic device can release the displaying of the auxiliary display unit. According to one embodiment, when the input does not occur during the second reference time, the electronic device 100 can cut the power supply of the second display unit as shown in FIG. 12C.

In the above-stated embodiment, when the input does not occur during the second reference time, the electronic device, but not limited to, cuts the power supply of the second display 163. When the first display 161 and the second display 163 are the single display, that is, when the electronic device 100 cannot cut the power supply of the second display 163 alone, it can display the second display 163 with a black image or control only the backlight.

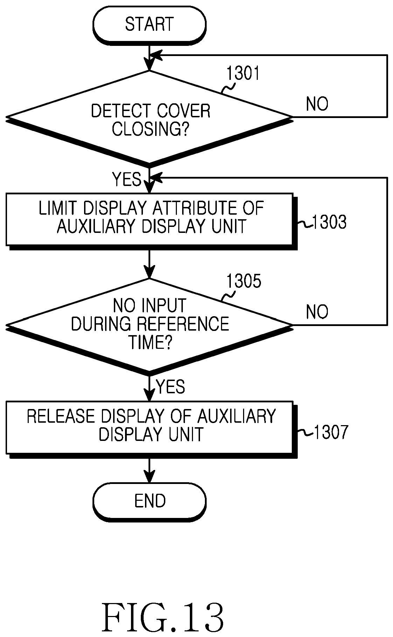

FIG. 13 depicts a method for controlling a display attribute of an auxiliary display unit based on cover closing/opening in an electronic device according to various embodiments.

Referring to FIG. 13, in step 1301, the electronic device can detect whether a cover is closed. For example, the electronic device can detect whether the cover is closed using a hall sensor (hall IC) or a proximity sensor.

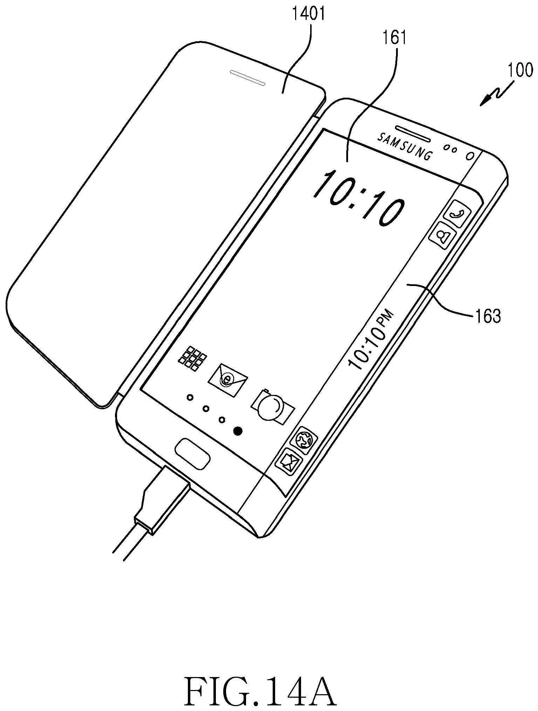

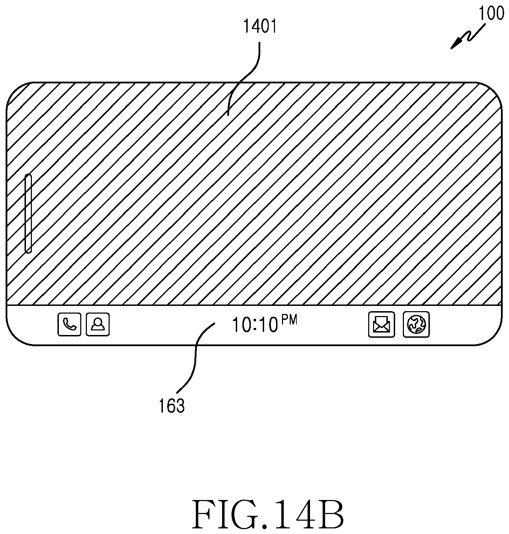

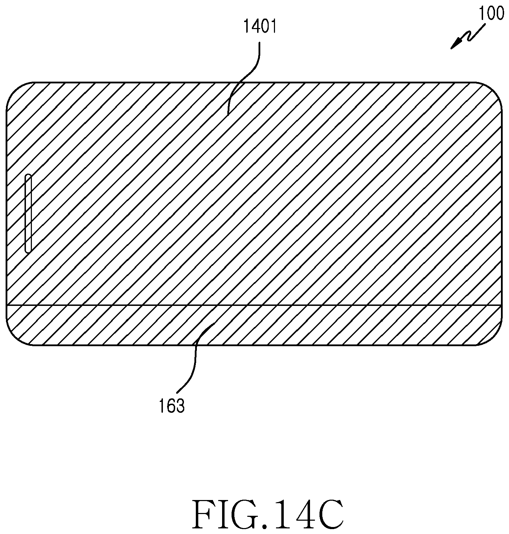

In step 1303, when determining that the cover is closed, the electronic device can limit the display attribute of the auxiliary display unit. According to one embodiment, as shown in FIG. 14A, when a cover 1401 is open and the cover is 1401 is determined to be closed during a display event for the first display 161 and the second display 163 as shown in FIG. 14B, the electronic device 100 can cut the power supply of the first display 161 and limit the display attribute of the second display 163. For example, the electronic device 100 can limit the brightness level displayed through the second display 163 below the reference level. For example, the electronic device 100 can limit the number of colors which can be displayed through the second display 163 below the reference number. For example, the electronic device 100 can limit the screen refresh rate of the second display 163 below the reference rate.

According to one embodiment, when determining that the cover is closed, the electronic device 100 can display at least one of a clock (e.g., current time information, time information based on a current location), weather (e.g., weather information based on the current location), and a notification time (e.g., fastest alarm information) on the second display 163. For example, the electronic device 100 can determine information to display on the second display 163 based on a user selection.

In the above-stated embodiment, when determining that the cover is closed, the electronic device, but not limited to, cuts the power supply of the first display 161. When the first display 161 and the second display 163 are the single display, that is, when the electronic device 100 cannot cut the power supply of the first display 161 alone, it can display the first display 161 with a black image or control only the backlight.

In step 1305, the electronic device checks whether an input occurs during a reference time. For example, the electronic device can check whether the input occurs through a touch screen. For example, the electronic device can check whether the input occurs through a button.

In step 1307, when the input does not occur during the reference time, the electronic device can release the displaying of the auxiliary display unit. According to one embodiment, as shown in FIG. 12C, the electronic device can cut the power supply of the second display 163.

In the above-stated embodiment, when the input does not occur during the reference time, the electronic device, but not limited to, cuts the power supply of the second display 163. When the first display 161 and the second display 163 are the single display, that is, when the electronic device 100 cannot cut the power supply of the second display 163 alone, it can display the second display 163 with a black image or control only the backlight.

In the various embodiments mentioned above, the electronic device can control the divided display based on context information.

According to one embodiment, when both of the divided first display 161 and second display 163 are released from the displaying (e.g., power off) and a notification event (e.g., a push (alarm, incoming call, incoming message, etc.)) occurs, only the second display 163 can be activated to display the corresponding notification event. For example, the electronic device 100 can display the corresponding notification event by limiting the brightness level displayed on the second display 163 below the reference level. For example, the electronic device 100 can display the corresponding notification event by limiting the number of colors displayed on the second display 163 below the reference number. For example, the electronic device 100 can display the corresponding notification event by limiting the screen refresh rate of the second display 163 below the reference rate. For example, the electronic device 100 can display a representative color (e.g., an icon color, a predefined color, a user's setting color) of an application which generates the notification event on the second display 163.

According to one embodiment, after only the second display 163 is activated to display the corresponding notification event, when a reference time passes, the electronic device can release (e.g., power off) the displaying of the second display 163.

According to one embodiment, when there are multiple notification events displayed through the second display 163, the electronic device can sequentially display the multiple notification events. For example, after sequentially displaying the multiple notification events, the electronic device can release the displaying of the second display 163.

According to one embodiment, when there are multiple notification events displayed through the second display 163, the electronic device can display the multiple notification events based on a user input.

Additionally, when a preset gesture is input to at least one display of the first display 161 or the second display 163, the electronic device can provide an interface for editing information to be displayed on the second display 163.

Hence, the electronic device user can create information to display on the second display 163, change an information display order, delete information, and upload and download information through the interface.

When creating the information, the interface of the electronic device can include an image (e.g., an immediately captured image, a stored image, etc.), text, handwriting, and so on.

The electronic device can display the created information through the second display 163 and also display based on particular context information.

According to various embodiments, a method for operating an electronic device can include checking context information for controlling a display divided into a first display and a second display; and controlling at least one of the first display and the second display based on the context information.

According to various embodiments, the first display and the second display can be configured as independent displays.

According to various embodiments, the first display and the second display can be at least partial areas of the display.

According to various embodiments, controlling at least one of the first display and the second display based on the context information can include cutting power of at least one of the first display and the second display based on the context information.

According to various embodiments, controlling at least one of the first display and the second display based on the context information can include limiting a display attribute of at least one of the first display and the second display based on the context information.

According to various embodiments, the display attribute can include at least one of a brightness level, the number of colors, and a screen refresh rate which can be displayed on the first display and the second display.

According to various embodiments, controlling at least one of the first display and the second display based on the context information can include cutting power of the first display during a preset time and displaying by limiting a display attribute of the second display.

According to various embodiments, controlling at least one of the first display and the second dis play based on the context information can include, when no movement occurs during a reference time, cutting power of the first display and displaying by limiting a display attribute of the second display.

According to various embodiments, controlling at least one of the first display and the second display based on the context information can include, when no movement and input occur during a reference time, cutting power of the first display and displaying by limiting a display attribute of the second display.

According to various embodiments, controlling at least one of the first display and the second display based on the context information can include, when detecting that the display is covered by a cover, cutting power of the first display and displaying by limiting a display attribute of the second display.

The term "module" as used in the present disclosure can imply, for example, a unit including hardware, software, firmware, or a combination of one or two or more of them. "module" can be interchangeably used with terms, for example, such as "unit", "logic", "logical block", "component", "circuit", and the like. "module" can be a minimum unit of an integral component or can be a part thereof. "module" can be a minimum unit for performing one or more functions or a part thereof. "module" can be mechanically or electrically implemented. For example, "module" can include at least one of an Application-Specific Integrated Circuit (ASIC) chip, a Field-Programmable Gate Arrays (FPGAs), or a programmable-logic device, which are known or will be developed, for performing certain operations.

At least part of a device (e.g., modules or functions thereof) or a method (e.g., operations) according to various embodiments can be implemented with, for example, an instruction stored in a computer-readable storage medium as a program module. When the instruction is executed by a processor (e.g., the processor 120), one or more processors can perform a function corresponding to the instruction. The computer readable recording medium can be, for example, the memory 130.

The computer-readable recording medium can include a hard disk, a floppy disk, magnetic media (e.g., a magnetic tape), optical media (e.g., a CD-ROM, a DVD), magnetooptical media (e.g.,. a floptical disk), and hardware devices (e.g., a ROM, a RAM, or a flash memory). Also, a program instruction can include not only machine code made by a compiler but also high-level language code executable by a computer using an interpreter. The above-stated hardware device can serve as one or more software modules for fulfilling the operations of various embodiments, and vice versa.

A module or a program module according to various embodiments can include at least one or more of the aforementioned components, omit some of them, or further include additional other components. Operations performed by a module, a program module, or other components according to various embodiments can be executed in a sequential, parallel, repetitive, or heuristic manner. In addition, some operations can be executed in a different order or be omitted, or other operations can be added.

According to various embodiments, a computer-readable recording medium storing instructions can be a computer-readable recording medium recording a program for fulfilling checking context information indicating a status change of the electronic device; and controlling at least one of the first display and the second display based on the context information.

The various embodiments included in this disclosure are presented for the explanation and the understanding of the technical contents, not to limit the scope of the invention. Accordingly, the scope of the present invention should be construed to include all the changes or other various embodiments based on technical ideas of the present invention.

## Claims

1. An electronic device comprising:
a display divided into a first display and a second display; and
a processor for checking context information indicating a status change of the electronic device and controlling at least one of the first display and the second display based on the context information.

2. The electronic device of claim 1, wherein the first display and the second display are configured as independent displays.

3. The electronic device of claim 1, wherein the first display and the second display are at least partial areas of the display.

4. The electronic device of claim 1, wherein the processor controls to cut power of at least one of the first display and the second display based on the context information.

5. The electronic device of claim 1, wherein the processor displays by limiting a display attribute of at least one of the first display and the second display based on the context information.

6. The electronic device of claim 5, wherein the display attribute comprises at least one of a brightness level, the number of colors, and a screen refresh rate which can be displayed on the first display and the second display.

7. The electronic device of claim 1, wherein the processor controls to cut power of the first display during a preset time and to display by limiting a display attribute of the second display.

8. The electronic device of claim 1, wherein, when no movement occurs during a reference time, the processor controls to cut power of the first display and to display by limiting a display attribute of the second display.

9. The electronic device of claim 1, wherein, when no movement and input occur during a reference time, the processor controls to cut power of the first display and to display by limiting a display attribute of the second display.

10. The electronic device of claim 1, wherein, when detecting that the display is covered by a cover, the processor controls to cut power of the first display and to display by limiting a display attribute of the second display.

11. A method for operating an electronic device, comprising:
checking context information for controlling a display divided into a first display and a second display; and
controlling at least one of the first display and the second display based on the context information.

12. The method of claim 11, wherein the first display and the second display are configured as independent displays.

13. The method of claim 11, wherein the first display and the second display are at least partial areas of the display.

14. The method of claim 11, wherein controlling at least one of the first display and the second display based on the context information comprises:
cutting power of at least one of the first display and the second display based on the context information.

15. The method of claim 11, wherein controlling at least one of the first display and the second display based on the context information comprises:
limiting a display attribute of at least one of the first display and the second display based on the context information.

16. The method of claim 15, wherein the display attribute comprises at least one of a brightness level, the number of colors, and a screen refresh rate which can be displayed on the first display and the second display.

17. The method of claim 11, wherein controlling at least one of the first display and the second display based on the context information comprises:
cutting power of the first display during a preset time and displaying by limiting a display attribute of the second display.

18. The method of claim 11, wherein controlling at least one of the first display and the second display based on the context information comprises:
when no movement occurs during a reference time, cutting power of the first display and displaying by limiting a display attribute of the second display.

19. The method of claim 11, wherein controlling at least one of the first display and the second display based on the context information comprises:
when no movement and input occur during a reference time, cutting power of the first display and displaying by limiting a display attribute of the second display.

20. The method of claim 11, wherein controlling at least one of the first display and the second display based on the context information comprises:
when detecting that the display is covered by a cover, cutting power of the first display and displaying by limiting a display attribute of the second display.

21. The method of claim 11, further comprising:
detecting a preset gesture input for at least one display of the first display or the second display; and
when detecting the gesture input, providing an interface for editing information to be displayed on the second display.

22. The method of claim 21, wherein providing the interface comprises:
providing at least one of creation, display order change, deletion, upload, and download of the information to be displayed on the second display, through the interface.

23. A computer-readable recording medium storing instructions, recording a program for checking context information for controlling a display divided into a first display and a second display; and
controlling at least one of the first display and the second display based on the context information.
